# EUROPÄISCHE PATENTSCHRIFT

(11) **EP 3 625 416 B1**
(45) Veröffentlichungstag und Bekanntmachung des Hinweises auf die Patenterteilung: **29.03.2023**
(21) Anmeldenummer: 17780908.4
(22) Anmeldetag: 15.05.2017
(51) Int. Cl.: E05F 1/10

(54) **FEDERPAKET FÜR EINEN KLAPPENHALTER**
SPRING PACK FOR A LID HOLDER
ENSEMBLE RESSORT POUR UN SUPPORT DE VOLET

(43) Veröffentlichungstag der Anmeldung: 25.03.2020
(73) Patentinhaber: Samet Kalip Ve Madeni Esya San. Ve Tic. A.S., 34513 Esenyurt/Istanbul (TR)
(72) Erfinder: HIRTSIEFER, Artur, 53819 Neunkirchen-Seelscheid (DE)
(74) Vertreter: Herrmann, Jochen
(86) Internationale Anmeldenummer: PCT/TR2017/000056
(87) Internationale Veröffentlichungsnummer: WO 2018/212722

(56) Entgegenhaltungen:
- EP-A1- 3 045 634
- DE-U1-202005 008 222
- DE-U1-202012 000 695
- FR-A1- 2 265 957

## Beschreibung

Die Erfindung betrifft ein Federpaket zum Antrieb eines Klappenhalters für eine Klappe eines Möbelstücks, wobei das Federpaket einen ersten und einen zweiten Halter aufweist, wobei die Halter durch zumindest eine Feder gegeneinander vorgespannt sind und wobei jeder Halter zumindest eine Federaufnahme aufweist.

Ein Klappenhalter mit einem solchen Federpaket ist aus der DE 10 2015 117 291 B3 bekannt. Klappenhalter dieser Art dienen der Unterstützung der Öffnungs- und Schließbewegung einer Klappe an einem Möbelstück. Dabei kann die Klappe einstückig oder als zweistückige Faltklappe ausgebildet sein. Der Klappenhalter ist mittels eines Steuerarms mit der Klappe gelenkig verbunden und überträgt über diesen eine in Öffnungsrichtung wirkende Kraft auf die Klappe. Die dazu erforderliche Energie wird von einem als Federpaket ausgebildeten Energiespeicher bereitgestellt. Der Energiespeicher weist zwei gegenüberliegend angeordnete Halter auf, die mittels Spannelementen gegeneinander vorgespannt sind. Die als Druckfedern ausgebildeten Spannelemente sind dabei endseitig jeweils in Federaufnahmen der Halter eingesetzt. Ein Halter ist über ein Schwenklager gelenkig mit einem Gehäuse des Klappenhalters verbunden. Der gegenüberliegende Halter ist über ein Koppelglied an einem Hebelmechanismus angelenkt. Der Hebelmechanismus überträgt die Federkraft an einen Hebel, an dem der zur Klappe führende Steuerarm befestigt werden kann.

Das Dokument FR 2 265 957 A1 zeigt einen mechanischen Ausgleicher eines in Höhe oder Neigung einstellbaren Objekts, insbesondere für eine Hintertür eines Personen- oder Nutzfahrzeugs. Dieser mechanische Ausgleicher zeichnet sich durch zwei schraubenförmige Druckfedern mit Längsachsen parallel zueinander aus. Dabei ist eine im Durchmesser kleine Feder mittels einer Halterung und über ein Kopplungsstück in der Halterung eine im Durchmesser größeren Feder geführt. Das Kopplungsstück ist dabei zylinderförmig ausgeführt und weist auf einer Seite eine hülsenförmige Aufnahme für die Feder des kleineren Durchmessers auf, wobei der Durchmesser kleiner als der des zylinderförmigen Kopplungsstücks ist.

Gegenüberliegend ist das Kopplungsstück geöffnet, um die Feder des größeren Durchmessers einzuführen.

Aus dem Dokument DE 20 2005 008 222 U1 ist ein Federsatz für einen teleskopischen Klappenantrieb, insbesondere für eine Heckklappe eines Fahrzeugs, bekannt. Der Federsatz zeigt ein Anschlussteil zum Anschließen des Federsatzes, beispielsweise an einer Karosserie oder an einem teleskopischen Klappenantrieb, mit einer Innen- und Außenfeder. Dabei ist die Innenfeder mittels einer Führung in der Außenfeder geführt, welche wiederum in einer Hülse geführt ist. Somit kann das Ausknicken der inneren und äußeren Feder vermieden werden.

Die Druckfedern sind zur Bereitstellung einer vergleichsweise hohen Vorspannung zwischen den beiden Haltern ausgelegt. Dabei sind sie im Bereich zwischen den beiden Haltern außen nicht geführt. Eine Führung durch jeweils einen im Kern der Druckfedern angeordneten Federdorn ist nur begrenzt möglich, da der Federdorn den Stellweg der beiden Halter zueinander begrenzt. Damit besteht die Gefahr, dass die Druckfedern im Bereich zwischen den beiden Haltern seitlich wegknicken. Dies gilt insbesondere in Stellpositionen des Klappenhalters, in denen die beiden Halter des Federpakets weit auseinanderliegend angeordnet sind.

Es ist daher Aufgabe der Erfindung, ein Federpaket bereitzustellen, welches eine sichere Führung der verwendeten Federn über den gesamten vorgesehenen Stellweg des Federpakets ermöglicht.

Die Aufgabe der Erfindung wird dadurch gelöst, dass die Halter durch zumindest zwei in Reihe zueinander angeordnete Federn gegeneinander vorgespannt sind, und dass zwischen den Federn ein Kopplungsstück angeordnet ist, welches die Kraft zwischen den in Reihe angeordneten Federn überträgt und welches zumindest zwei Federführungen aufweist, welche die Federn zumindest abschnittsweise seitlich führen. Durch die Federführung wird ein seitliches Wegknicken der Federn sicher vermieden. Auf ihren dem Kopplungsstück abgewandten Seiten sind die Federn in den Federaufnahmen der gegenüberliegend angeordneten Halter aufgenommen. Sie sind dadurch auch in ihren dem Kopplungsstück abgewandten Endbereichen seitlich geführt. Das Kopplungsstück ist in Richtung der wirkenden Federkraft lediglich durch die in Reihe zueinander angeordneten Federn gehalten. Damit ist es in Stellrichtung des Federpakets selbstzentrierend positioniert. Es bleibt bei allen zulässigen Stellungen der beiden Halter zueinander in dem zwischen den Haltern ausgebildeten Spalt angeordnet. Dadurch ist über den gesamten zulässigen Stellbereich des Federpakets eine seitliche Führung der Federn gewährleistet. Das Kopplungsstück weist zusätzlich zumindest einen Federanschlag auf, an dem die Federn gegenüberliegend zu dem der jeweiligen Feder zugeordneten Halter anliegen. Die Federkraft wird über den Federanschlag zwischen den Federn übertragen. Gleichzeitig ist das Kopplungsstück durch den zwischen den Federn eingeklemmten Federanschlag gehalten. Ebenso ist vorgesehen, dass das Kopplungsstück als Rohr ausgebildet ist, dessen Innenraum durch den ersten Federanschlag in zwei die Federführungen bildende Hülsenabschnitte aufgeteilt ist, von denen der eine zu dem ersten Halter hin weisend und der andere zu dem zweiten Halter hin weisend geöffnet ist. Auf diese Weise wird ein einfacher Aufbau des Kopplungsstücks bei gleichzeitig guter seitlicher Führung der gegenüberliegend angeordneten und in die Hülsenabschnitte eingeführten Federn erreicht. Der erste Federanschlag bildet den inneren Abschluss der als Hülse ausgeführten Federführungen, an dem die Federn beidseitig anliegen.

Eine gute seitliche Führung der Federn durch das Kopplungsstück kann dadurch erreicht werden, dass zumindest eine der Federführungen als Hülse ausgebildet ist, in die die zugeordnete Feder zumindest teilweise eingesteckt ist.

Die seitliche Führung der Federn kann dadurch weiter verbessert werden, dass zumindest eine Federführung als Hülse ausgeführt ist und dass die zugeordnete Feder durch jeweils einen zusätzlichen Federdorn geführt ist, und dass die zugeordnete Feder zumindest abschnittsweise durch die Federaufnahme eines Halters und/oder durch eine zusätzliche Federhülse geführt ist. Auf diese Weise sind die Federn sowohl an ihrem Innendurchmesser als auch an ihrem Außendurchmesser geführt. Vorteilhaft stützen die zusätzlichen Führungselemente (Federdorn bzw. Federhülse) die Federn ausgehend von den den Federführungen des Kopplungsstücks gegenüberliegenden Endbereichen. Durch diese Ausführungsvariante der Erfindung wird erreicht, dass die Federn für alle zulässigen Stellungen des Federpakets über ihre komplette Länge quer zu ihren Längserstreckungen gestützt sind.

Ein einfacher Aufbau des Federpakets bei gleichzeitig guter seitlicher Führung der jeweiligen Feder kann dadurch erreicht werden, dass der Federdorn von Seiten des Halters in die Feder eingeschoben ist, dass sich der Federdorn an dem Halter abstützt und dass die Feder an einem Bund des Federdorns anliegt. Die Feder ist so von der einen Seite durch den Federdorn und von der gegenüberliegenden Seite durch die Federführung des Kopplungsstücks geführt. Dabei können sich die Führungsbereiche in einem von der vorliegenden Kompression und damit der Länge der Federn abhängigen Überlappungsbereich überschneiden.

Eine belastbare seitliche Führung des Kopplungsstücks kann dadurch erreicht werden, dass die Federführung zumindest abschnittsweise in einer Federaufnahme eines Halters angeordnet ist. Das Kopplungsstück stützt sich so mit seiner Federführung mittelbar oder unmittelbar seitlich an der Federaufnahme des Halters ab.

Erfindungsgemäß kann es vorgesehen sein, dass der Federanschlag, bezogen auf die Längserstreckung des Kopplungsstücks, in der Mitte des Kopplungsstücks oder außerhalb der Mitte und beabstandet zu den Enden des Kopplungsstücks angeordnet ist. Eine Anordnung des Federanschlags in der Mitte des Kopplungsstücks ist vorteilhaft, wenn die in Reihe geschalteten Federn gleich ausgebildet sind und auch die Tiefe der gegenüberliegend angeordneten Federaufnahmen in den Haltern gleich gewählt sind. Bei einem asymmetrischen Aufbau, bei dem unterschiedlich ausgebildete Federn verwendet sind und/oder Federaufnahmen mit voneinander abweichender Tiefe in einem Federstrang vorgesehen sind, kann eine außerhalb der Mitte des Kopplungsstücks liegende Anordnung des Federanschlags vorteilhaft sein, um zu gewährleisten, dass der zwischen den Haltern ausgebildete Spalt vollständig von dem Kopplungsstück überbrückt wird.

Um eine größere zwischen den Haltern wirkende Federkraft zu erreichen kann es vorgesehen sein, dass die Halter durch zumindest ein weiteres, durchgängiges Federelement gegeneinander vorgespannt sind. Das Federelement wirkt somit parallel zu den in Reihe zueinander angeordneten Federn. Die Selbstzentrierung des Kopplungsstücks erfolgt auch hier durch dessen Lagerung zwischen den in Reihe zueinander angeordneten Federn.

Ein seitliches Wegknicken des durchgängig zwischen den Haltern angeordneten Federelements kann dadurch vermieden werden, dass das durchgängige Federelement zumindest abschnittsweise von dem Kopplungsstück geführt ist und/oder dass das durchgängige Federelement zumindest abschnittsweise in den gegenüberliegenden Federaufnahmen der gegenüberliegenden Halter gehalten ist. Ist die Federführung des Kopplungsstücks als Hülse ausgebildet, so kann das durchgängige Federelement außen an dem Kopplungsstück geführt sein. Die äußere Oberfläche des Kopplungsstücks bildet dann eine Führungsfläche für das durchgängige Federelement. Auch kann eine entlang der Mittellängsachse verlaufende Bohrung in das Kopplungsstück eingebracht sein, in der das durchgängige Federelement angeordnet ist.

Die in dem Federpaket gespeicherte Energie sowie die verfügbare Federkraft kann dadurch an die jeweiligen Anforderungen angepasst werden, dass zwischen den Haltern zwei oder mehrere parallel zueinander wirkende Federstränge mit jeweils einem Kopplungsstücke und mit jeweils zumindest zwei in Reihe zueinander angeordneten Federn angeordnet sind, welche die Halter gegeneinander vorspannen.

Die Erfindung wird im Folgenden anhand eines in den Zeichnungen dargestellten Ausführungsbeispiels näher erläutert. Es zeigen:
- Figur 1: einen Klappenhalter für eine Möbelklappe mit einem ersten Federpaket in einer seitlichen Schnittdarstellung,
- Figur 2: das in Figur 1 gezeigte erste Federpaket in einer perspektivischen Explosionsdarstellung,
- Figur 3: das in Figur 2 gezeigte erste Federpaket bei zum Teil ineinandergeschobenen Bauteilen,
- Figur 4: das in Figur 1 gezeigte erste Federpaket in einer vergrößerten seitlichen Schnittdarstellung und
- Figur 5: in einer perspektivischen Explosionsdarstellung ein zweites, nicht erfindungsgemäßes Federpaket.

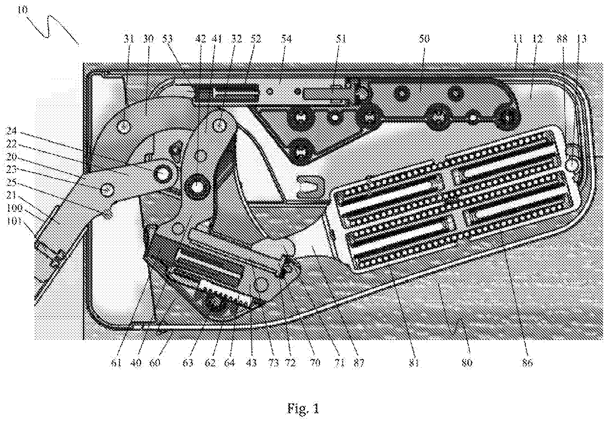

Figur 1 zeigt einen Klappenhalter 10 für eine Möbelklappe mit einem ersten Federpaket 80 in einer seitlichen Schnittdarstellung. Der Klappenhalter 10 ist in einem Gehäuse 11 eingehaust. Es umfasst zwei über ein Distanzstück 50 beabstandet zueinander angeordnete und gehaltene Lagerplatten 12, von denen in der gewählten Schnittdarstellung nur eine zu sehen ist.

Aus dem Gehäuse 11 ist ein Hebelansatz 21 eines Hebels 20 herausgeführt. Der Hebel 20 ist Teil eines Hebelmechanismus. Der Hebelmechanismus überträgt eine von dem vorliegend ersten Federpaket 80 bereitgestellte Federkraft auf einen Steuerarm 100, der auf den Hebelansatz 21 des Hebels 20 aufgesteckt und mittels einer Feststellschraube 101 daran fixiert ist. Der Steuerarm 100 bildet eine gelenkige Verbindung zu einer Klappe, Faltklappe, Tür oder dergleichen eines Möbelstücks, an dessen Korpus der Klappenhalter 10 befestigt ist. Der Hebel 20 weist einen Befestigungsabschnitt 22 auf. Dieser ist über eine Schwenkachse 24 gelenkig mit den beiden Lagerplatten 12 verbunden. An den Hebel 20 ist beidseitig jeweils eine Koppelstelle 23 angeformt. Diese dient der gelenkigen Verbindung des Hebels 20 mit beidseitig an den Hebel 20 herangeführten Verbindungsabschnitten 30, von denen in der gewählten Schnittdarstellung nur der hintere zu sehen ist. Die Verbindungsabschnitte 30 sind bogenförmig ausgebildet. Sie sind gegenüberliegend zu dem Hebel 20 über eine zweite Koppelstelle 32 gelenkig mit einem Spannhebel 40 verbunden.

Der Spannhebel 40 ist um ein Lager 42 schwenkbar mit den Lagerplatten 12 verbunden. Die Verbindung zu dem Verbindungsabschnitt 30 erfolgt dabei an einem von dem Lager 42 ausgehenden Hebelarm 41 des Spannhebels 40. Gegenüberliegend zu dem Hebelarm 41 bildet der Spannhebel 40 einen Ansatz 43 aus. An dem Ansatz 43 ist ein Schieber 62 linear verstellbar gelagert. Der Schieber 62 ist Teil einer Dämpfungseinheit 60. Der Dämpfungseinheit 60 sind ein Dämpfer 61 mit einem Bedienelement 63 und einer Zahnstange 64 zugeordnet. Der Schieber 62 arbeitet mit einem Anschlag 25, der dem Schieber 62 zugewandt an dem Hebel 20 angeformt ist, zusammen. Beim Schließen der Möbelklappe stoßen der Anschlag 25 und der Schieber 62 aneinander, wodurch der Schieber 62 verstellt wird. Dabei drückt der Schieber 62 den Dämpfer 61 zusammen, wodurch die Schließbewegung abgedämpft wird. Mit Hilfe der Zahnstange 64 kann der Dämpfungsbereich der Dämpfungseinheit 60 eingestellt werden.

An dem Ansatz 43 des Spannhebels 40 ist weiterhin ein Stellelement 70 angeordnet. Das Stellelement 70 weist ein Bedienteil 72 und ein daran anschließendes Gewinde 73 auf. Das Stellelement 70 ist drehbar, aber linear festgelegt, mit dem Ansatz 43 des Spannhebels 40 verbunden. Auf das Gewinde 73 ist ein Lagerstück 71 aufgeschraubt. Durch Drehen des Stellelements 70 kann das Lagerstück 71 entlang des Gewindes 72 stufenlos verstellt werden. An das Lagerstück 71 ist das erste Federpaket 80 angekoppelt. Das erste Federpaket 80 weist einen ersten Halter 81 und einen beabstandet dazu angeordneten zweiten Halter 86 auf. Die beiden Halter 81, 86 sind mittels Spannelementen gegeneinander vorgespannt, wie dies näher in den Figuren 1 bis 4 gezeigt ist. Vorliegend sind die Spannelemente in zwei parallel zueinander wirkenden Federsträngen angeordnet, die jeweils zwischen den beiden Haltern (81, 86) eingespannt sind. An den ersten Halter 81 ist ein Koppelglied 87 angeformt, welches die schwenkbar und lösbar Verbindung zu dem Lagerstück 71 herstellt. Gegenüberliegend ist der zweite Halter 86 mit einem daran angeformten Lagerabschnitt 88 schwenkbar an einem Lagerbolzen 13 gelagert. Der Lagerbolzen 13 ist an den beiden Lagerplatten 12 festgelegt.

Das erste Federpaket 80 ist somit zwischen dem Lagerbolzen 13 und dem Lagerstück 71 eingespannt. Dabei üben die Spannelemente eine Kraft auf die Halter 81, 86 aus, welche diese auseinander drückt. Die Kraft wird über das Lagerstück 71 auf den Spannhebel 40 übertragen. Der Spannhebel 40 leitet die Kraft über die Verbindungsabschnitte 30 an den Hebel 20 und den daran angeschlossenen Steuerarm 100 weiter. Dieser überträgt die Kraft wiederum an die angeschlossene Klappe, Faltklappe, Tür oder dergleichen.

Mit Hilfe des Stellelements 70 kann die Position des Lagerstücks 71 verändert werden. Damit verändert sich die Hebellänge zwischen der Krafteinleitung durch das erste Federpaket 80 und dem Lager 42 des Spannhebels 40. Mit dem Stellelement 70 kann somit die auf den Hebel 20 übertragene Kraft eingestellt und damit an das Gewicht der verwendeten Klappe, Faltklappe, Tür oder dergleichen angepasst werden.

An dem Distanzstück 50 ist ein Schiebestück 54 angeordnet, welches ein Dämpfungselement 52 trägt. Die Position des Schiebestücks 54 und damit des Dämpfungselement 52 kann mit einem Einstellelement 51 gegenüber dem Distanzstück 50 eingestellt werden. Ein Auftreffpunkt 53 des Dämpfungselements 52 ist in dem Stellweg eines die Verbindungsabschnitten 30 verbindenden Fixierelements 31 angeordnet. Beim Öffnen der Möbelklappe trifft das Fixierelement 31 auf den Auftreffpunkt 53 des Dämpfungselements 52, wodurch die Öffnungsbewegung in ihrem letzten Bewegungsabschnitt abgedämpft wird. Der Dämpfungsbereich kann durch das Einstellelement 51 eingestellt werden.

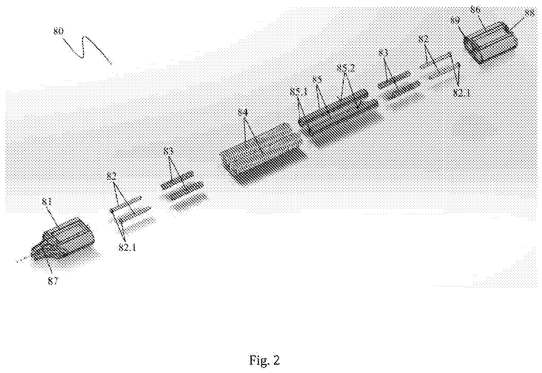

Figur 2 zeigt das in Figur 1 in seiner Einbauposition am Klappenhalter 10 gezeigte erste Federpaket 80 in einer perspektivischen Explosionsdarstellung. Ausgehend von dem ersten Halter 81 sind in zwei nebeneinander liegenden Federsträngen jeweils ein Federdorn 82, eine innere Feder 83, ein Federelement 84, ein erstes Kopplungsstück 85, eine weitere innere Feder 83 und ein Federdorn 82 angeordnet. Die Bauelemente sind innerhalb der Federstränge jeweils entlang ihrer Längserstreckung fluchtend zueinander ausgerichtet. In die Halter 81, 86 sind jeweils zwei Federaufnahmen 89 eingeformt, die zu dem gegenüberliegenden Halter 81, 86 hin geöffnet sind. Die Bauelementreihen sind fluchtend zu jeweils zwei gegenüberliegend angeordneten Federaufnahmen 89 ausgerichtet.

Die Federdorne 82 sind an ihren den Haltern 81, 86 zugewandten Enden jeweils von einem Bund 82.1 abgeschlossen. In die ersten Kopplungsstücke 85 sind entlang ihrer Längserstreckung verlaufende erste Federführungen 85.1 eingelassen. Die Federführungen 85.1 sind als Hülsen ausgebildet. Die Außenflächen der ersten Kopplungsstücke 85 bilden Führungsflächen 85.2.

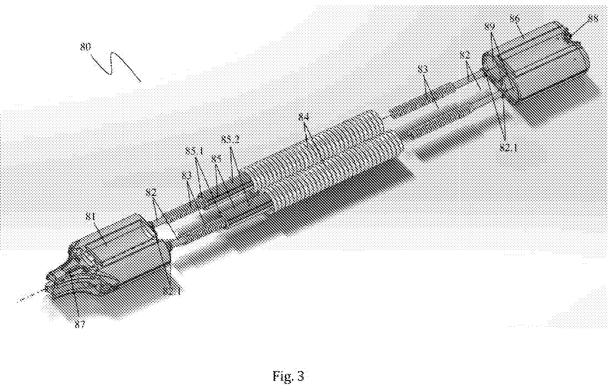

Figur 3 zeigt das in Figur 2 gezeigte erste Federpaket 80 bei zum Teil ineinandergeschobenen Bauteilen. Die inneren Federn 83 sind ein Stück weit auf die Federdorne 82 aufgeschoben. Die dem ersten Halter 81 zugewandten inneren Federn 83 sind teilweise in die ersten Federführungen 85.1 der jeweils in einem Federstrang angeordneten ersten Kopplungsstücke 85 eingeschoben. Die inneren Federn 83 sind somit innen durch die Federdorne 82 und außen durch die Kopplungsstücke 85 geführt. Die Federelemente 84 sind teilweise auf die ersten Federführungen 85.1 aufgeschoben. Die Federelemente 84 sind auf diese Weise durch die Kopplungsstücke 85 geführt.

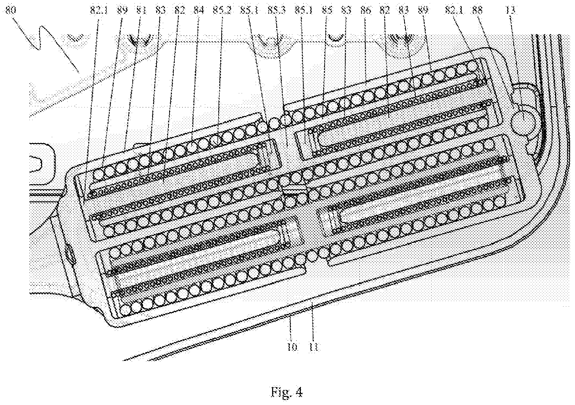

Figur 4 zeigt das in Figur 1 gezeigte erste Federpaket 80 in einer vergrößerten seitlichen Schnittdarstellung. Das erste Federpaket 80 ist entsprechend der Darstellung in Figur 1 in den Klappenhalter 10 eingebaut. Die Halter 81, 86 sind derart zueinander ausgerichtet, dass sich jeweils zwei Federaufnahmen 89 gegenüberstehen. Zwischen den gegenüberliegenden Federaufnahmen 89 ist jeweils ein Federstrang angeordnet. Die beiden Federstränge sind gleich aufgebaut. Die nachfolgende Beschreibung erfolgt daher für einen Federstrang, ist aber für beide Federstränge zutreffend.

Das erste Kopplungsstück 85 ist rohrförmig ausgebildet. Der Innenraum des Kopplungsstücks 85 ist durch einen ersten Federanschlag 85.3 in die beiden ersten Federführungen 85.1 aufgeteilt. Die Federführungen 85.1 sind hülsenartig ausgebildet. Sie sind jeweils zu einem Halter 81, 86 hin weisend geöffnet.

In jeder der Federaufnahmen 89 ist ein Federdorn 82 angeordnet. Die Federdorne 82 stützen sich mit ihren Bünden 82.1 an den inneren Abschlüssen der Federaufnahmen 89 ab. Die inneren Federn 83 sind auf die Federdorne 82 aufgeschoben und liegen an deren Bünden 82.1 an. Das erste Kopplungsstück 85 ist mit seinen ersten Federführungen 85.1 über die inneren Federn 83 gestülpt. Die Federführung 85.1 ist jeweils in die gegenüberliegenden Federaufnahmen 89 der gegenüberliegend angeordneten Halter 81, 86 geführt. Die inneren Federn 83 sind somit zwischen den Bünden 82.1 der Federdorne 82 und dem ersten Federanschlag 85.3 des ersten Kopplungsstücks 85 eingespannt. Das Federelement 84 ist auf die äußere Führungsfläche 85.2 des ersten Kopplungsstücks 85 gesteckt. Es ist beidseitig in die gegenüberliegenden Federaufnahmen 89 geführt. Dabei ist es innerhalb einer jeweiligen Federaufnahme 89 zwischen dem ersten Kopplungsstück 85 und der Wandung der Federaufnahme 89 angeordnet. Das Federelement 84 stützt sich in Längsrichtung an dem Boden der jeweiligen Federaufnahme 89 ab.

Wie in Figur 1 gezeigt, ist das erste Federpaket 80 zwischen dem Lagerstück 71 des Stellelements 70 und dem Lagerbolzen 13 eingespannt. Die als Druckfeder ausgebildeten inneren Federn 83 und Federelemente 84 sind dadurch zusammengedrückt. Die Halter 81, 86 sind durch einen Spalt voneinander beabstandet.

Wie Figur 4 zu entnehmen ist, stützen sich die vorgespannten Federelemente 84 an den gegenüberliegend angeordneten Haltern 81, 86 ab und drücken diese auseinander. Die inneren Federn 83 eines Federstrangs sind über das erste Kopplungsstück 85 in Reihe zueinander geschaltet. Auch sie übertragen somit eine nach außen gerichtete Kraft auf die gegenüberliegenden Halter 81, 86. Die Halter 81, 86 sind somit sowohl durch die Federelemente 84 als auch durch die inneren Federn 83 gegeneinander vorgespannt.

Die inneren Federn 83 eines Federstrangs stützen sich an dem ersten Federanschlag 85.3 des zugeordneten ersten Kopplungsstücks 85 ab. Die inneren Federn 83 innerhalb eines Federstrangs sind gleich ausgebildet und weisen die gleiche Federkonstante auf. Dadurch ist das erste Kopplungsstück 85.3 selbstzentrierend zwischen den beiden Haltern 81, 86 ausgerichtet. Bei sich veränderndem Abstand zwischen den beiden Haltern 81, 86 ändert sich die Position des ersten Kopplungsstücks 85.3 in gleicher Weise gegenüber den beiden Haltern 81, 86. Das erste Kopplungsstück 85.3 ist damit immer so positioniert, dass es innerhalb des zulässigen Stellweges der beiden Halter 81, 86 zueinander den zwischen den Haltern 81, 86 ausgebildeten Spalt überbrückt. Dadurch ist das außen an dem ersten Kopplungsstück 85.3 geführte Federelement 84 immer im Bereich des Spaltes zwischen den Haltern 81, 86 durch das erste Kopplungsstück 85.3 gestützt. Ein seitliches Wegknicken der Federelemente 84 wird so in allen innerhalb des Stellbereichs des ersten Federpaket 80 möglichen Stellungen der beiden Halter 81, 86 zueinander sicher vermieden. Dies gilt insbesondere bei entspanntem oder weitestgehend entspanntem ersten Federpaket 80, bei dem die Halter 81, 86 innerhalb des möglichen Stellbereichs am weitesten voneinander beabstandet sind. Die Federaufnahmen 89 und das erste Kopplungsstück 85 sind so aufeinander abgestimmt, dass das erste Kopplungsstück 85 auch bei größtem zulässigen Abstand zwischen den Haltern 81, 86 noch um eine vorgegebene Länge in die jeweiligen Federaufnahmen 89 hineinragt. Dadurch wird eine sichere seitliche Führung des ersten Kopplungsstücks 85 sowie der Halter 81, 86 zueinander erreicht.

Innerhalb der Federaufnahmen 89 sind die Federelemente 84 seitlich durch die Wandungen der Federaufnahmen 89 gestützt. Dadurch wird auch in diesem Bereich ein seitliches Wegknicken der Federelemente 84 vermieden.

Die inneren Federn 83 sind innen von den Federdornen 82 und außen in den ersten Federführungen 85.1 des jeweils ersten Kopplungsstücks 85 geführt. Die Länge der ersten Federführungen 85.1 und der Federdorne 82 sind so aufeinander abgestimmt, dass die Federdorne 82 auch bei weitest zulässigem Abstand zwischen den Haltern 81, 86 noch um eine vorgegebene Strecke in die jeweilige Federführung 85.1 des zugeordneten ersten Kopplungsstücks 85 hineinragen. Dadurch wird eine durchgängige seitliche Führung der inneren Federn 83 erreicht.

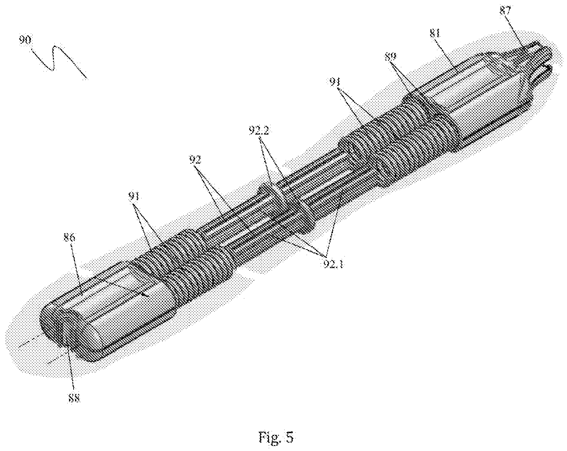

Figur 5 zeigt in einer perspektivischen Explosionsdarstellung ein zweites, nicht erfindungsgemäßes Federpaket 90. Das zweite Federpaket 90 weist die gleichen Halter 81, 86 wie das in den Figuren 1 bis 4 gezeigte erste Federpaket 80 auf, auf deren Beschreibung verwiesen wird. Die äußeren Abmessungen der beiden zusammengebauten Federpakete 80, 90 sind gleich, sodass sie äquivalent in den in Figur 1 gezeigten Klappenhalter 10 eingebaut werden können.

Das zweite Federpaket 90 weist ebenfalls zwei parallel zueinander angeordnete Federstränge auf. Ausgehend von dem ersten Halter 81 sind je Federstrang eine Feder 91, ein zweites Kopplungsstück 92 und eine weitere Feder 91 fluchtend zueinander angeordnet. Die Federn 91 sind als Druckfeder ausgebildet. Sie sind jeweils einer Federaufnahme 89 der gegenüberliegend angeordneten Halter 81, 86 zugeordnet. Ihr Außendurchmesser ist so gewählt, dass sie mit geringem Abstand zu deren Wandung in die Federaufnahmen 89 eingesetzt werden können.

Die zweiten Kopplungsstück 92 sind stabförmige ausgebildet. Sie weisen einen im Wesentlichen quadratischen Querschnitt auf, wobei entlang der in Längsrichtung verlaufenden Ecken des Kopplungsstücks 92 Führungsabschnitte angeformt sind. Der Abstand der äußeren Oberflächen der diagonal gegenüberliegend angeordneten Führungsabschnitte ist geringfügig kleiner als der Innendurchmesser der Federn 91 gewählt. Dadurch sind zweite Federführungen 92.1 ausgebildet, auf die die Federn 91 aufgeschoben werden können. Es ist auch denkbar, zweite Kopplungsstück 92 mit zylinderförmig ausgebildeten zweiten Federführungen 92.1 zu verwenden.

Jedes zweite Kopplungsstück 92 weist einen zweiten Federanschlag 92.2 auf, durch den es in jeweils zwei zweite Federführungen 92.1 aufgeteilt. Der zweite Federanschlag 92.2 ist scheibenförmigen ausgebildet. Er weist einen größeren Durchmesser auf als die zweiten Federführungen 92.1. Vorliegend ist der zweite Federanschlag 92.2 in Längsrichtung in der Mitte des zweiten Kopplungsstücks 92 angeordnet. Es ist jedoch auch denkbar, den zweiten Federanschlag 92.2 außerhalb der Mitte anzuordnen. Dies ist beispielsweise vorteilhaft, wenn die innerhalb eines Federstrangs angeordneten Federn 91 nicht gleich ausgebildet sind und/oder wenn die Federaufnahmen 89 der gegenüberliegend angeordneten Halter 81, 86 nicht gleich ausgebildet sind.

Zur Montage werden die Federn 91 auf die jeweils zugeordneten zweiten Federführungen 92.1 der zweiten Kopplungsstück 92 aufgeschoben. Anschließend werden die Federn 91 mit den zweiten Federführungen 92.1 in jeweils zugeordneten Federaufnahmen 89 eingeführt. Das zweite Federpaket 90 kann jetzt entsprechend der Darstellung in Figur 1 in den Klappenhalter 10 eingesetzt werden, wobei die beiden Halter 81, 86 zueinander vorgespannt werden.

Montiert liegen die Federn 91 im Inneren der Federaufnahmen 89 an deren ihren Öffnungen abgewandten Böden an. Gegenüberliegend stoßen die Federn 91 an den zweiten Federanschlägen 92.2 der Kopplungsstücke 92 an. An ihrem Innendurchmesser sind die Federn 91 abschnittsweise durch die zweiten Federführungen 92.1 geführt. Gegenüberliegend sind die Federn 91 außen von den Federaufnahmen 89 geführt. Dabei erstrecken sich die zweiten Federführungen 92.1 in jeder zulässigen Stellposition des zweiten Federpakets 90 über eine vorgegebene Strecke in die jeweilige Federaufnahmen 89. Die Federn 91 sind somit über ihre komplette Länge seitlich geführt. Dabei erfolgt die Führung außerhalb der Federaufnahmen 89 durch die zweiten Federführungen 92.1 der Kopplungsstücke 92. Innerhalb der Federführungen 92.1 sind die Federn 91 durch die Wandungen der Federaufnahmen 89 und abschnittsweise zusätzlich durch die Federführungen 92.1 der Kopplungsstücke 92 geführt. Dadurch ist sicher vermieden, dass die Federn 91 seitlich wegknicken.

Die Federn 91 eines Federstrangs sind in Reihe angeordnet. Dabei überträgt das zweite Kopplungsstück 92 die Federkraft zwischen den Federn 91.

Durch die beidseitig an den zweiten Federanschlägen 92.2 anliegenden Federn 91 zentriert sich die Position der zweiten Kopplungsstücke 92 selbsttätig. Die zweiten Kopplungsstücke 92 sind somit innerhalb des zulässigen Stellwegs der Halter 81, 86 zueinander immer zwischen den Haltern 81, 86 angeordnet. Dabei sind die Länge der zweiten Federführungen 92.1, die Tiefen der Federaufnahmen 89 und der maximal zulässige Stellweg des zweiten Federpakets 90 derart aufeinander abgestimmt, dass die zweiten Kopplungsstücke 92 mit ihren Endbereichen immer über eine vorgegebene Strecke in die zugeordneten Federaufnahmen 89 eintauchen.

Sowohl bei dem ersten wie auch bei dem zweiten Federpaket 80, 90 sind die Federn 83, 91 bzw. Federelemente 84 jeweils entlang zweier parallel zueinander wirkender Federstränge angeordnet. Es ist jedoch auch denkbar, Federpakete 80, 90 mit nur einem Federstrang oder mit mehr als zwei Federsträngen vorzusehen. Weiterhin ist es denkbar, dass mehr als zwei Federn 83, 91 auf ein Kopplungsstück 85, 92 einwirken. Ein wesentlicher Gedanke der Erfindung ist es, dass das Kopplungsstück 85, 92 längsverstellbar zwischen in Reihe zueinander angeordneten Federn 83, 91 gehalten ist.

## Patentansprüche

1. Federpaket (80) zum Antrieb eines Klappenhalters (10) für eine Klappe eines Möbelstücks, wobei das Federpaket (80) einen ersten und einen zweiten Halter (81, 86) aufweist, wobei die Halter (81, 86) durch zumindest eine Feder (83) gegeneinander vorgespannt sind und wobei jeder Halter (81, 86) zumindest eine Federaufnahme (89) aufweist,
wobei die Halter (81, 86) durch zumindest zwei in Reihe zueinander angeordnete Federn (83) gegeneinander vorgespannt sind, und dass zwischen den Federn (83) ein Kopplungsstück (85) angeordnet ist, welches die Kraft zwischen den in Reihe angeordneten Federn (83) überträgt und welches zumindest zwei Federführungen (85.1) aufweist, welche die Federn (83) zumindest abschnittsweise seitlich führen und
wobei das Kopplungsstück (85) zumindest einen Federanschlag (85.3) aufweist, an dem die Federn (83) gegenüberliegend zu dem der jeweiligen Feder (83) zugeordneten Halter (81, 86) anliegen,
**dadurch gekennzeichnet,**
**dass** das Kopplungsstück (85) als Rohr ausgebildet ist, dessen Innenraum durch den ersten Federanschlag (85.3) in zwei die Federführungen (85.1) bildende Hülsenabschnitte aufgeteilt ist, von denen der eine zu dem ersten Halter (81) hin weisend und der andere zu dem zweiten Halter (86) hin weisend geöffnet ist.

2. Federpaket (80) nach Anspruch 1,
**dadurch gekennzeichnet,**
**dass** zumindest eine der Federführungen (85.1) als Hülse ausgebildet ist, in die die zugeordnete Feder (83) zumindest teilweise eingesteckt ist.

3. Federpaket (80) nach einem der Ansprüche 1 bis 2,
**dadurch gekennzeichnet,**
**dass** zumindest eine Federführung (85.1) als Hülse ausgeführt ist und dass die zugeordnete Feder (83) durch jeweils einen zusätzlichen Federdorn (82) geführt ist.und dass die zugeordnete Feder (83) zumindest abschnittsweise durch die Federaufnahme (89) eines Halters (81, 86) und/oder durch eine zusätzliche Federhülse geführt ist.

4. Federpaket (80) nach Anspruch 3,
**dadurch gekennzeichnet,**
**dass** der Federdorn (82) von Seiten des Halters (81, 86) in die Feder (83) eingeschoben ist, dass sich der Federdorn (82) an dem Halter (81, 86) abstützt und dass die Feder (83) an einem Bund (82.1) des Federdorns (82) anliegt.

5. Federpaket (80) nach einem der Ansprüche 1 bis 4,
**dadurch gekennzeichnet,**
**dass** die Federführung (85.1) zumindest abschnittsweise in einer Federaufnahme (89) eines Halters (81, 86) angeordnet ist.

6. Federpaket (80) nach einem der Ansprüche 4 und 5,
**dadurch gekennzeichnet,**
**dass** der Federanschlag (85.3), bezogen auf die Längserstreckung des Kopplungsstücks (85), in der Mitte des Kopplungsstücks (85) oder außerhalb der Mitte und beabstandet zu den Enden des Kopplungsstücks (85) angeordnet ist.

7. Federpaket (80) nach einem der Ansprüche 1 bis 6,
**dadurch gekennzeichnet,**
**dass** die Halter (81, 86) durch zumindest ein weiteres, durchgängiges Federelement (84) gegeneinander vorgespannt sind.

8. Federpaket (80) nach Anspruch 7,
**dadurch gekennzeichnet,**
**dass** das durchgängige Federelement (84) zumindest abschnittsweise von dem Kopplungsstück (85) geführt ist und/oder dass das durchgängige Federelement (84) zumindest abschnittsweise in den gegenüberliegenden Federaufnahmen (89) der gegenüberliegenden Halter (81, 86) gehalten ist.

9. Federpaket (80,) nach einem der Ansprüche 1 bis 8,
**dadurch gekennzeichnet,**
**dass** zwischen den Haltern (81, 86) zwei oder mehrere parallel zueinander wirkende Federstränge mit jeweils einem Kopplungsstücke (85) und mit jeweils zumindest zwei in Reihe zueinander angeordneten Federn (83) angeordnet sind, welche die Halter (81, 86) gegeneinander vorspannen.

## Claims

1. A spring assembly (80) for driving a flap holder (10) for a flap of a piece of furniture, the spring assembly (80) having a first and a second holder (81, 86), the holders (81, 86) being prestressed against one another by at least one spring (83), and each holder (81, 86) having at least one spring receptacle (89), wherein the holders (81, 86) are prestressed against each other by at least two springs (83) arranged in series with each other, and in that a coupling piece (85) is arranged between the springs (83), which transmits the force between the springs (83) arranged in series and which has at least two spring guides (85. 1) which guide the springs (83) laterally at least in sections, and the coupling piece (85) having at least one spring stop (85.3) against which the springs (83) rest opposite the holder (81, 86) assigned to the respective spring (83),
**characterized**
**in that** the coupling piece (85) is designed as a tube whose interior is divided by the first spring stop (85.3) into two sleeve sections forming the spring guides (85.1), one of which is open facing the first holder (81) and the other facing the second holder (86).

2. A spring assembly (80) according to claim 1,
**characterized**
**in that** at least one of the spring guides (85.1) is designed as a sleeve into which the associated spring (83) is at least partially inserted.

3. A spring assembly (80) according to one of claims 1 to 2,
**characterized**
**in that** at least one spring guide (85.1) is designed as a sleeve and in that the associated spring (83) is guided by an additional spring mandrel (82) in each case, and in that the associated spring (83) is guided at least in sections by the spring receptacle (89) of a holder (81, 86) and/or by an additional spring sleeve.

4. A spring assembly (80) according to claim 3,
**characterized**
**in that** the spring mandrel (82) is inserted into the spring (83) from the side of the holder (81, 86), in that the spring mandrel (82) is supported on the holder (81, 86), and in that the spring (83) bears against a collar (82.1) of the spring mandrel (82).

5. A spring assembly (80) according to one of claims 1 to 4,
**characterized**
**in that** the spring guide (85.1) is arranged at least in sections in a spring receptacle (89) of a holder (81, 86).

6. A spring assembly (80) according to one of claims 4 and 5,
**characterized**
**in that** the spring stop (85.3) is arranged in the center of the coupling piece (85), relative to the longitudinal extension of the coupling piece (85), or outside the center and spaced apart from the ends of the coupling piece (85).

7. A spring assembly (80) according to any one of claims 1 to 6,
**characterized**
**in that** the holders (81, 86) are prestressed against one another by at least one further, continuous spring element (84).

8. A spring assembly (80) according to claim 7,
**characterized**
**in that** the continuous spring element (84) is guided at least in sections by the coupling piece (85) and/or in that the continuous spring element (84) is held at least in sections in the opposite spring receptacles (89) of the opposite holders (81, 86).

9. A spring assembly (80) according to one of claims 1 to 8,
**characterized**
**in that** two or more spring strands acting parallel to one another are arranged between the holders (81, 86), each with a coupling piece (85) and with in each case at least two springs (83) which are arranged in series with one another and prestress the holders (81, 86) against one another.

## Revendications

1. Ensemble de ressorts (80) pour l'entraînement d'un support de volet (10) pour un volet d'un meuble, l'ensemble de ressorts (80) présentant un premier et un deuxième supports (81, 86), les supports (81, 86) étant précontraints l'un contre l'autre par au moins un ressort (83) et chaque support (81, 86) présentant au moins un logement de ressort (89), les supports (81, 86) étant précontraints l'un par rapport à l'autre par au moins deux ressorts (83) disposés en série, et en ce qu'entre les ressorts (83) est disposée une pièce de couplage (85) qui transmet la force entre les ressorts (83) disposés en série et qui comporte au moins deux guides de ressort (85. 1) qui guident latéralement les ressorts (83) au moins par sections et la pièce d'accouplement (85) présentant au moins une butée de ressort (85.3) sur laquelle les ressorts (83) s'appuient en face du support (81, 86) associé au ressort respectif (83),
**caractérisé**
**en ce que** la pièce d'accouplement (85) est réalisée sous forme de tube dont l'espace intérieur est traversé par la première butée de ressort (85.3). 3) est divisé en deux sections de douille formant les guides de ressort (85.1), dont l'une est ouverte en direction du premier support (81) et l'autre en direction du deuxième support (86).

2. Ensemble de ressorts (80) selon la revendication 1,
**caractérisé**
**en ce qu'**au moins l'un des guides de ressort (85.1) est réalisé sous la forme d'une douille dans laquelle le ressort (83) associé est enfiché au moins partiellement.

3. Ensemble de ressorts (80) selon l'une des revendications 1 à 2,
**caractérisé**
**en ce qu'**au moins un guide de ressort (85.1) est réalisé sous forme de douille et **en ce que** le ressort (83) associé est guidé par une broche de ressort (82) supplémentaire respective, et **en ce que** le ressort (83) associé est guidé au moins par sections à travers le logement de ressort (89) d'un support (81, 86) et/ou à travers une douille de ressort supplémentaire.

4. Ensemble de ressorts (80) selon la revendication 3,
**caractérisé**
**en ce que** la broche de ressort (82) est insérée dans le ressort (83) du côté du support (81, 86), **en ce que** la broche de ressort (82) s'appuie sur le support (81, 86) et **en ce que** le ressort (83) s'appuie sur un épaulement (82.1) de la broche de ressort (82).

5. Ensemble de ressorts (80) selon l'une des revendications 1 à 4,
**caractérisé**
**en ce que** le guide de ressort (85.1) est disposé au moins par sections dans un logement de ressort (89) d'un support (81, 86).

6. Ensemble de ressorts (80) selon l'une des revendications 4 et 5,
**caractérisé**
**en ce que** la butée de ressort (85.3) est disposée, par rapport à l'extension longitudinale de la pièce d'accouplement (85), au centre de la pièce d'accouplement (85) ou en dehors du centre et à distance des extrémités de la pièce d'accouplement (85).

7. Ensemble de ressorts (80) selon l'une des revendications 1 à 6,
**caractérisé**
**en ce que** les supports (81, 86) sont précontraints l'un contre l'autre par au moins un autre élément de ressort continu (84).

8. Ensemble de ressorts (80) selon la revendication 7,
**caractérisé**
**en ce que** l'élément de ressort continu (84) est guidé au moins par sections par la pièce d'accouplement (85) et/ou **en ce que** l'élément de ressort continu (84) est maintenu au moins par sections dans les logements de ressort (89) opposés des supports (81, 86) opposés.

9. Ensemble de ressorts (80) selon l'une des revendications 1 à 8,
**caractérisé**
**en ce qu'**entre les supports (81, 86) sont disposés deux ou plusieurs faisceaux de ressorts agissant parallèlement les uns aux autres, avec chacun une pièce d'accouplement (85) et avec chacun au moins deux ressorts (83) disposés en série les uns par rapport aux autres, qui précontraignent les supports (81, 86) les uns par rapport aux autres.
